(19) **Europäisches Patentamt**

**European Patent Office**

**Office européen des brevets**

(11) **EP 1 470 918 A2**

(12) **EUROPEAN PATENT APPLICATION**

(43) Date of publication:
**27.10.2004 Bulletin 2004/44**

(51) Int Cl.[7]: **B41F 33/00**, G01J 3/50,
G01J 3/28

(21) Application number: **04252096.5**

(22) Date of filing: **08.04.2004**

| | |
|---|---|
| (84) Designated Contracting States:<br>**AT BE BG CH CY CZ DE DK EE ES FI FR GB GR HU IE IT LI LU MC NL PL PT RO SE SI SK TR**<br>Designated Extension States:<br>**AL HR LT LV MK**<br><br>(30) Priority: **25.04.2003 US 424230**<br>**17.02.2004 US 790451**<br><br>(71) Applicant: **QUAD/TECH, INC.**<br>**Sussex, WI 53089 (US)** | (72) Inventors:<br>• **Noffke, Patrick James**<br>**Mequon Wisconsin 53097 (US)**<br>• **Younk, Patrick**<br>**Richfield Wisconsin 53017 (US)**<br>• **Moersfelder, Bradley S.**<br>**Waukesha Wisconsin 53188 (US)**<br><br>(74) Representative: **Every, David Aidan et al**<br>**MARKS & CLERK,**<br>**Sussex House,**<br>**83-85 Mosley Street**<br>**Manchester M2 3LG (GB)** |

(54) **System and method for measuring color on a printing press**

(57) An image processing apparatus and method for measuring spatial and spectral information from an image of a printed substrate. The image processing apparatus processes the spatial and spectral information from the same acquired image using first and second processors. One of the first or second processors includes a large format sensor and the other of the first or second processors includes a small format sensor. Both the first and second processors are capable of processing both the spatial and spectral information and neither the first or second processor is necessarily dedicated to processing only the spatial or spectral information.

EP 1 470 918 A2

**Description**

FIELD OF THE INVENTION

The present invention relates to an apparatus and method for measuring spectral and spatial information on a printing press.

BACKGROUND OF THE INVENTION

In the printing industry, a desired image is repeatedly printed on a continuous web or substrate such as paper. In a typical printing process, the continuous web is slit in the longitudinal direction (the direction of web movement) to produce a plurality of continuous ribbons. The ribbons are aligned one on top of the other, folded longitudinally, and then cut laterally to produce a plurality of multi-page, approximately page-length segments, each of which is termed a "signature". The term signature also encompasses a single printed sheet that has or has not been folded.

To monitor the print quality on a signature, various methods may be used to measure the color quality of the printed signature. One method includes printing a color bar having multiple color patches of different known colors and intensities such that the color quality of the color bar can be measured and compared to a standard, the color bar being representative of the color quality of the printed signature. By so doing, the color quality of the printed signature may be measured by utilizing an image processing apparatus, e.g., a camera, to acquire an image of a single point of the printed color bar. Current image processing apparatus systems for measuring the color quality may utilize a single camera, such as a CCD color camera having red, green, and blue channels (i.e., an RGB camera).

It may also be desired to provide an image processing device that can take color measurements at a high rate of speed. So doing would allow for more direct measurement of the printed image (i.e., the ability to measure color in the work in addition to the color bar), would make the control system respond faster to color errors, and would assist in locating a desired place on the signature with a searching algorithm for additional measurements.

SUMMARY OF THE INVENTION

The invention provides an image processing apparatus for use with a printed substrate. The image processing apparatus includes a first processor that receives an acquired image from the printed substrate, and a second processor that receives the same acquired image from the printed substrate. Both the first and second processors are capable of processing the spectral information from the acquired image.

In one embodiment, the first processor includes a large format sensor, such as a single black and white CCD sensor or three CCD color sensor, and the second processor includes a small format sensor, such as a line-scan CCD sensor or an area-scan CCD. In another embodiment, the image processing apparatus also includes a fiber optic bundle positioned to receive the acquired image from the printed substrate and is operable to direct the acquired image to the second processor. In another embodiment, the first processor includes a sensor having a low spectral resolution, and the second processor includes a sensor having a high spectral resolution. In another embodiment, the first and second processors are in communication such that information from one of the processors can be used to direct the function of the other processor. For example, the information from the first processor can be used to control the registration of the second processor, or the information from the second processor can be used to calibrate the first processor. In another embodiment, the second processor is removable.

In another aspect, the invention provides a method for monitoring the color of a printed substrate including the steps of acquiring an image from the printed substrate, providing the acquired image to a first processor, and providing the same acquired image to the second processor, where both the first and second processors are capable of processing spectral information from the acquired image.

In another aspect, the invention provides an image processing apparatus including a first processor that receives at least a first portion of an acquired image from the printed substrate, and a second processor that receives at least a second portion of the acquired image from the printed substrate. Both the first and second processors are capable of processing the spectral information from the first and second portions of the acquired image, respectively.

Other features and advantages of the invention will become apparent to those skilled in the art upon review of the following detailed description, drawings, and claims.

BRIEF DESCRIPTION OF THE DRAWINGS

Fig. 1 is a block diagram of a printing system in accordance with the present invention;
Fig. 2 illustrates an image processing apparatus assembly and a printed image within the field of view;
Fig. 3 is a schematic diagram of an image processing apparatus assembly according to one embodiment of the present invention;
Fig. 4 is a more detailed schematic of the diagram of Fig. 3;
Fig. 5 illustrates the image generated by the image processing apparatus of the present invention, taken through the color bar patches of a printed substrate;

Fig. 6 is a flow chart of a scattered light correction;
Fig. 7 is a schematic diagram of the optics of another embodiment of the image processing apparatus;
Fig. 8 is a more detailed schematic of the diagram of Fig. 7;
Fig. 9 is a schematic diagram of the optics of another embodiment of the image processing apparatus;
Fig. 10 is a schematic diagram of the optics of another embodiment of the image processing apparatus;
Fig. 11 is a schematic diagram of the optics of another embodiment of the image processing apparatus.

Before one embodiment of the invention is explained in detail, it is to be understood that the invention is not limited in its application to the details of construction and the arrangement of components set forth in the following description or illustrated in the drawings. The invention is capable of other embodiments and of being practiced or of being carried out in various ways. Also, it is to be understood that the phraseology and terminology used herein is for the purpose of description and should not be regarded as limiting.

## DETAILED DESCRIPTION

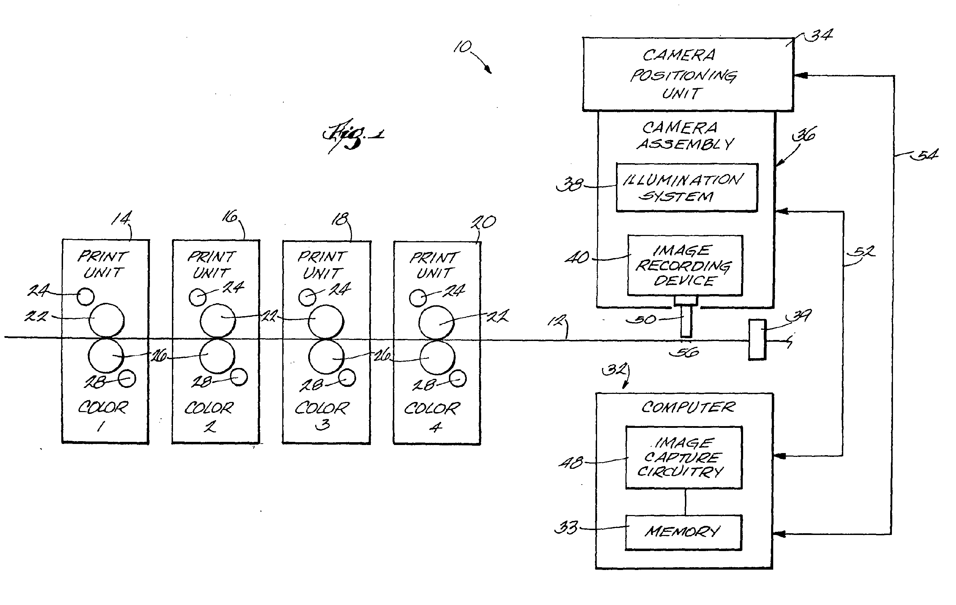

Referring to Fig. 1, a printing system 10 for printing a multi-color image upon a web 12 is illustrated. In the illustrated embodiment, four printing units 14, 16, 18, and 20 each print one color of the image upon the web 12. This type of printing is commonly referred to as web offset printing. Each print unit 14, 16, 18, 20 includes an upper blanket cylinder 22, an upper printing plate cylinder 24, a lower blanket cylinder 26, and a lower printing plate cylinder 28. In the printing system 10, colors 1, 2, 3, and 4 on units 14, 16, 18, and 20 respectively, are black (K), cyan (C), magenta (M), and yellow (Y). However, it is understood that any colors of ink may be effectively analyzed by the present invention. The location of the printing units 14, 16, 18, and 20 relative to each other is determined by the printer, and may vary.

In the illustrated embodiment, the printing press is a web offset press. It is contemplated, however, that the present invention be applicable to other types of printing presses, such as rotogravure, flexographic, and sheet-fed presses. The present invention may also be used for other applications, such as for use in the packaging industry.

The system 10 includes an image processing apparatus 36 in optical communication with the web 12. The image processing apparatus 36 includes an illumination system 38 and an image recording device 40. The specific configuration of the image processing apparatus 36 will be described in more detail below. The printing system 10 includes a positioning unit 34, a computer 32, and a web stabilizer 39.

It is known in the printing industry to print one or more color bars along an edge portion of the web 12. Color bars typically include multiple patches of different colors (K, C, M, and Y in the present embodiment), intensities, and half-tone values (such as 25% patches, 50% patches, and 75% patches). The image processing apparatus 36 captures an image of these color bars to monitor the color quality of the web 12. However, it is understood that in some applications, the color bars may not be necessary as measurements can be taken from any region within the printed region. The information obtained from the color bars or from any other position on the web will be described in more detail below.

In general operation, the positioning unit 34 moves the image processing apparatus 36 to a first position on the web 12. A printed image is illuminated by the illumination system 38 and the image recording device 40 records an image signal which is representative of a portion of the printed substrate within the field of view 56. The illumination system 38 is synchronized with the movement of the web 12 such that the recorded image signal includes a portion of the color bars.

The computer 32 may be of the conventional type such as including a Pentium microprocessor and PC architecture. The computer 32 includes random access memory 33 (semiconductor memory and/or disk drive storage) and image capture circuitry 48 which interfaces with the image processing apparatus 36. In other embodiments, the computer 32 may be a microprocessor housed within the image processing apparatus 36.

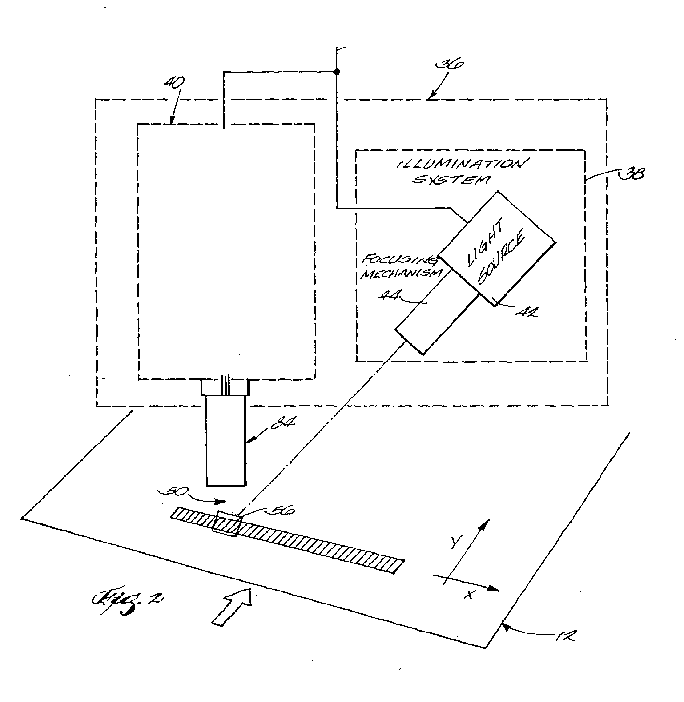

The computer 32 is connected to the positioning unit 34 by a communication link 54, and the computer 32 sends control signals to the positioning unit 34. The positioning unit 34 is mechanically coupled to the image processing apparatus 36 and moves the image processing apparatus 36 in a direction perpendicular to the web motion, termed the lateral direction (X-axis, see Fig. 2). Moving the image processing apparatus 36 across the web 12 allows selective image recording of lateral portions of the printed image on the web 12. The image processing apparatus 36 records the printed image within the field of view 56 for various positions of the image processing apparatus 36 across the web 12. The web 12 is moving in the Y direction so that circumferential or Y-axis positioning by the positioning unit 34 is not necessary because the timing of the strobe light in the illumination system 38 effectively provides circumferential positioning relative to the moving web 12, as is further explained below.

It is also contemplated that a positioning unit not be utilized, if, for example, a plurality of image processing apparatus are combined to obtain a field of view that covers all required areas of the web 12, or if only one area of the web 12 is to be monitored.

Stabilization may be necessary to reduce the web motion toward and away from the image processing apparatus 36. This motion is termed web flutter. Web flutter will cause the image to sometimes be out of focus and will cause the magnification of the image to change. The stabilizer 39 can be any mechanism that dampens the flutter of web 12 to within acceptable limits of depth-of-field for recording the printed image on the web 12 by the image processing apparatus 36, without causing the ink to smear. The web stabilizer 39 may be a non-invasive web stabilizer such as that disclosed in U.S. Pat. No. 4,913,049 entitled "Bernoulli Effect Web Stabilizer." A non-invasive stabilizer is one that does not make physical contact with the web 12.

Reduction of rippling or corrugations in the web may also be necessary. Any ripples in the web 12 can cause light and dark spots in the image obtained from the web 12. These light and dark spots do not usually affect the determination of the location of the color bar (or whatever other area of the web that you are imaging), but they can adversely affect the color measurements of the image. One way to reduce these ripples in the web is to run the web 12 over an idler, giving more support to the web 12.

If the web 12 is transparent or translucent, accurate optical density measurements will require that light reflected back through the web 12 be minimized. This can be accomplished by providing a black backing behind the web 12, providing a large open cavity behind the web 12 such that little light will be reflected through the web 12, or utilizing a black roller if the web 12 is stabilized by imaging on a roller.

The image processing apparatus 36 and positioning unit 34 may be mounted on the press anywhere after the ink has been applied to the web 12. For example, they may be mounted between the last print unit and the oven, directly after the oven, on the chill rolls, or after the chill rolls. If optical density measurements are required in the absence of other inks, or if the measurement is required immediately subsequent to printing, it may be advantageous to mount the image processing apparatus 36 and the positioning unit 34 between print units.

The illumination system 38 is coupled to the computer 32 by a signal bus 52. The illumination system 38 includes a light source 42 (only one shown) and a focusing mechanism 44. Control signals from the computer 32, corresponding to when a color bar is within the field of view 56, are sent via the signal bus 52 to indicate when the web 12 should be illuminated by the light source 42. The light source 42 in the illustrated embodiment is a xenon strobe, however other types of light sources can also be used. For example, for applications with slower web speed, halogen bulbs provide appropriate lighting.

In one embodiment, pulsed xenon strobe lights with a pulse duration of approximately one microsecond are utilized. With a web speed of 3500 feet per minute and if we want the color bar (or sampled region) to move less than 0.003" during the illumination period, a five microsecond illumination time is preferred to minimize the amount of movement of the printed image during the time the image recording device 40 is quantifying the amount of incoming light reflected from the web 12. By way of example, the light source 42 may include a strobe light assembly utilizing strobes FX-1163 with coordinated 1100 series power supplies, available from Perkin-Elmer.

The illumination control signals from the computer 32 are produced, for example, by conventional means utilizing rotational position information generated from a sensor placed on one of the blanket cylinders (22 or 26), knowledge of the speed of the web 12, and knowledge of the distance between the image recording device 40 and the blanket cylinder (22 or 26).

The focusing mechanism 44 efficiently concentrates the light emitted from the light source 42 onto the image within the field of view 56. When the strobe light is flashed, the image recording device 40 records the image within the field of view 56, which contains portions of the color bars. In some embodiments, to reduce the effects of scattered light, the lighting could be modified such that only the color bar is illuminated when measuring the spectra. In this embodiment, a larger area of the printed substrate would be illuminated while searching for a color bar and once the color bar is found, the lighting would be reduced to illuminate only the color bar and the area just adjacent to the color bar.

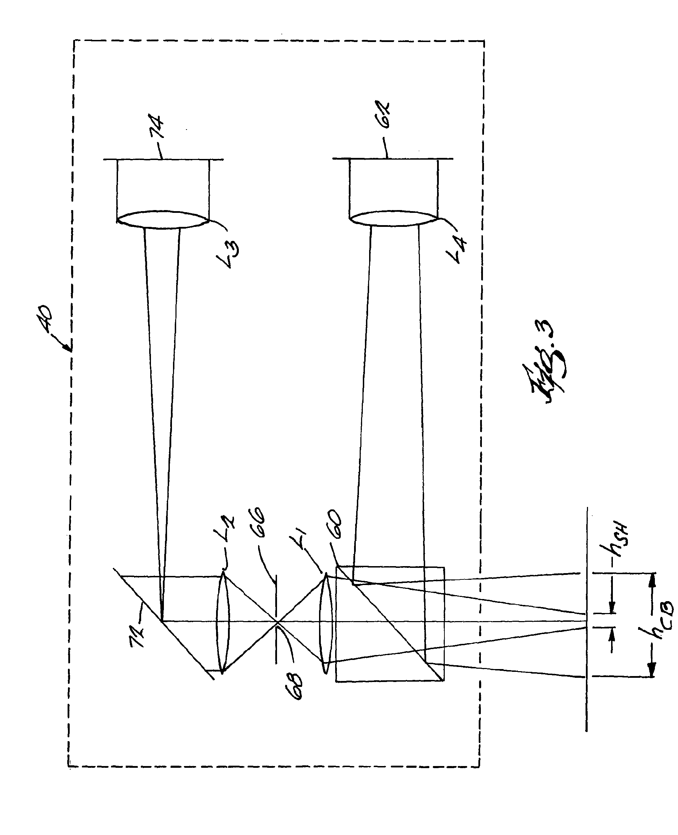

Turning now to Fig. 3, the image processing apparatus 36 of one embodiment of the present invention is shown. Light is reflected off of the web 12 into the image processing apparatus 36 and is received by a beamsplitter 60. This reflected light is the image acquired by the image processing apparatus 36. Beamsplitters of various reflection and transmission percentages can be used based on the overall efficiency of each path of optics. For example, if the spectral portion is less efficient than the spatial portion, a beamsplitter having a 30% reflectance and 70% transmittance may be used, where the transmitted portion of the beam progresses along the spectral path.

The acquired image represents a thin slice through multiple patches along a color bar. As illustrated in Fig. 3, a portion (i.e. a beam) of the acquired image is diverted by the beamsplitter 60 to a first processor. In the illustrated embodiment, the first processor is a spatial imaging device 62. The spatial imaging device 62 processes the spatial information from the acquired image. The spatial information conveys where on the web 12 the data is coming from.

Another portion of the same acquired image passes through the beamsplitter 60 to the focusing lens $L_1$. From the lens $L_1$, the image travels to the light blocker 66 having a slit 68 therein. The light blocker 66 may be made of any material that prevents light from passing therethrough. In the illustrated embodiment, the light blocker 66 is made of aluminum having a thickness of approximately ten microns. The light blocker 66 may be darkened or black anodized to reduce the incidence of reflected light off of the light blocker 66. The slit height and magnification of lens $L_1$ are chosen such that in the vertical direction (the short dimension of a color bar), approximately one-half of the image of the color bar is transmitted through the slit 68. The light blocker 66 allows circumferential movement (i.e. how much the image "moves" from sample to sample) of +/- ¼ of the color bar height. The length of the slit 68 is chosen such that several color bar patches (for example, ten) go through the slit 68. The size of the slit 68 assures that only light from the reflected color bar passes through the slit 68, even if the image is not centered on the slit 68. The lens $L_1$ focuses the acquired image onto the slit 68.

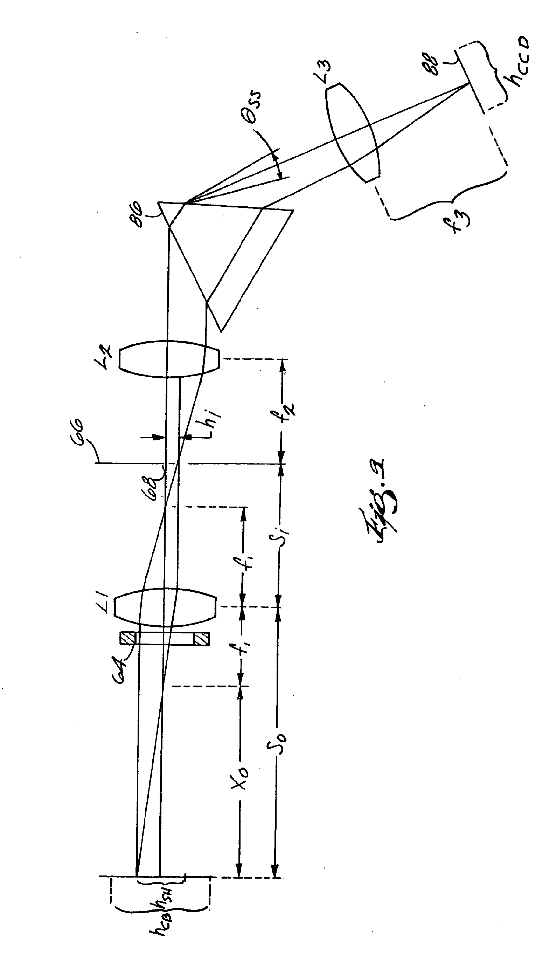

From the slit 68, light travels to a collimating lens $L_2$. The lens $L_2$ transmits light as a parallel beam to a ruled diffraction grating 72. It is understood that a transmission-type diffraction grating could also be used. It is also understood that a prism 86 may be used instead of a diffraction grating as the dispersing element. A system utilizing a prism is described in more detail below with respect to Fig. 9. The diffraction grating 72 disperses light into its spectral components along a known angular spread.

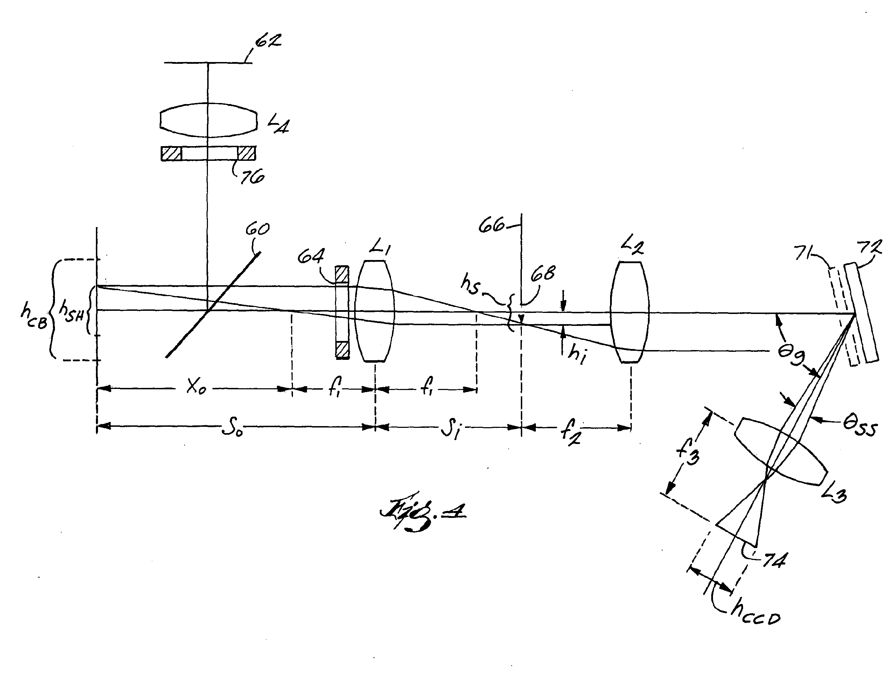

Gratings are designed to have higher efficiencies at particular frequencies, but have non-zero efficiency over a very wide range. For example, part number F43-742 from Edmund Optics has 600 lines/mm and is optimized to have maximum efficiency at 500 nm. However, this grating has significant efficiency from about 300 nm to 1200 nm. Light of multiple frequencies can also be diffracted at the same angle. For example, light at 800 nm is first-order diffracted at the same angle as the second-order diffraction of 400 nm, and the third order diffraction of 267 nm. If overlapping spectra are not desired, cutoff filters 71 that block light of the wavelengths not of interest should be inserted in the optical path before the diffraction grating. In the illustrated embodiment, we are interested in light between about 400 nm and about 700 nm such that cutoff filters 71 (shown in shadow in Fig. 4) would be inserted before the diffraction grating 72 to block all light above 700 nm and below 400 nm.

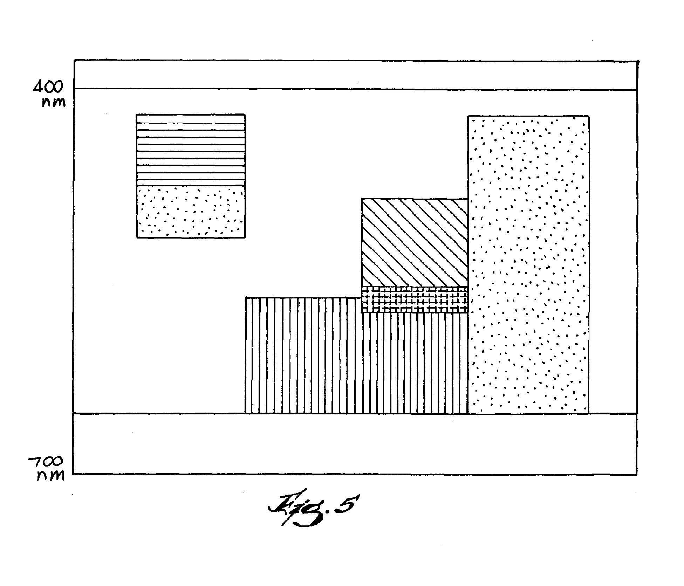

In the illustrated embodiment, the angular spread of light between about 400 nm and 700 nm is approximately 12°. This dispersion occurs in the vertical dimension (with reference to Fig. 5). A focusing lens $L_3$ focuses the dispersed light onto a second processor, where it is captured. In the illustrated embodiment, the second processor is a spectral imaging device 74. The spectral processing device 74 processes the spectral information from the acquired image.

Fig. 4 illustrates in more detail the optics of the image processing apparatus 36 described above with respect to Fig. 3. As illustrated, the portion of the beam transmitted through the beamsplitter 60 to the spatial components travels through an aperture 76 (to help limit the amount of incidental light and to help control the amount of aberrations) and through a lens $L_4$ onto the spatial imaging device 62. The magnification of the spatial components should be such that the light fits across the spatial imaging device 62. The lens $L_4$ should be placed such that the spatial imaging device 62 is at the focal length $f_4$ of lens $L_4$.

To determine the proper optical placement of the spectral components (i.e. the proper focal lengths of the lenses, as well as the proper position of the slit) within the imaging processing apparatus to get the spectral spread to fit across the spectral processing device 74, it is preferred to begin at the end (i.e. the spectral processing device 74) and work back to the color bar. First, the focal length $f_3$ of the lens $L_3$ is determined. This is dependent on the amount of spectral spread $\theta_{ss}$ off of the diffraction grating 72. If the spectral processing device 74 has a height $h_{CCD}$, then $\tan (\theta_{ss}/2) = h_{CCD}/2f_3$. Thus, in order for the spectra to fit on the spectral CCD, $f_3 \leq h_{CCD}/[2 \tan(\theta_{ss}/2)]$.

The spectral spread $\theta_{ss}$ is determined by the line spacing of the diffraction grating 72, and the wavelengths of the light of interest. In the illustrated embodiment, a diffraction grating 72 having 600 lines/mm is used. The grating equation is $m\lambda = d(\sin \theta_m - \sin \theta_i)$, where m = the diffraction order, d = the groove spacing of the grating, $\theta_m$ = the diffraction angle for order m, and $\theta_i$ = the incident angle of the light (e.g. the blaze angle, which is 8.6° in the illustrated embodiment).

For a blazed diffraction grating with blaze angle $\theta_b$, the diffracted light efficiency is maximized when $\theta_i = \theta_b$. If wavelengths from $\lambda_1 = 400$ nm to $\lambda_2 = 700$ nm are of interest (which approximately covers the range of visible light), and d = 1/600 lines/mm = 1667 nm, then for the first order diffraction (which is the preferred order because it has the highest strength of reflected light):

$$400 \text{ nm} = 1667 \text{ nm} (\sin \theta_{m1} - \sin (8.6°))$$

$$\theta_{m1} = 22.9°$$

and

$$700 \text{ nm} = 1667 \text{ nm} (\sin \theta_{m2} - \sin (8.6°))$$

$$\theta_{m2} = 34.7°.$$

Thus, the spectral spread is

$$\theta_{ss} = 34.7° - 22.9°$$

$$\theta_{ss} = 11.8°.$$

The spectral processor 74 is placed a distance from the lens $L_3$ equal to the focal length $f_3$. In the spatial dimen-

sion, the diffraction grating 72 acts as a mirror.

If the slit height is $h_s = 0.1$ mm, and 10 nm spectral resolution (or 36 bins) is desired, this equates to the zero-order slit width on the spectral processor 74 having a height of $h_{CCD}/36$. Calculating spectral resolution based on the zero-order slit width is an approximation, since the light through the slit has a non-uniform profile. Thus, the lens $L_3$ and the lens $L_2$ need a combined magnification of $|M_{23}| \leq h_{CCD}/[(0.1 \text{ mm})(36)]$. $|M_{23}| = f_3/f_2$, where $f_2$ is the focal length of the lens $L_2$. Thus,

$$f_3/f_2 \leq h_{CCD}/3.6 \text{ mm}$$

and

$$f_2 \geq 3.6 \, f_3/h_{CCD}.$$

If the sampled height of the color bar $h_{sh}$ is to be magnified to the slit height $h_s$, the slit is placed at the image position $s_i$ of the lens $L_1$ (to focus the image on the slit) and at a distance equal to the focal length $f_2$ of the lens $L_2$ (to collimate the light). If $h_{sh} = 0.8$ mm (or approximately 1/32 inch), and $h_s = 0.1$mm, then the lens $L_1$ must magnify by $|M_1| = 0.125$. But, we also need the spatial dimension to fit across the spatial processing device 62.

Plugging in some values, let $h_{CCD} = 4.36$ mm. Then

$$f_3 \leq 4.36 \text{ mm}/[2 \tan (11.8°/2)]$$

$$f_3 \leq 18.0 \text{mm}.$$

So, let $f_3 = 14$mm. Then,

$$f_2 \geq (3.6 \text{ mm})(14 \text{ mm})/4.36 \text{ mm}$$

$$f_2 \geq 11.6 \text{ mm}.$$

If 25 mm is to spatially fit across the spatial processor 62, the overall magnification $|M_{123}|$ must be

$$|M_{123}| = 4.36 \text{ mm}/25 \text{ mm}$$

$$|M_{123}| = 0.174.$$

If $|M_1| = 0.125$, then we need

$$|M_{23}| \leq 1.39$$

$$f_3/f_2 \leq 1.39$$

$$f_2 \geq (14 \text{ mm})/(1.39)$$

and

$$f_2 \geq 10.1 \text{ mm}.$$

The above calculations represent two constraints on the focal length $f_2$ such that a focal length should be chosen that satisfies both constraints. So, let $f_2 = 12.0$ mm.

The image height $h_i$ (i.e. the slit width) at the focal point of the lens $L_2$ determines the spectral resolution in the image processing apparatus. If 36 bins of spectral resolution are desired, then the light incident on the diffraction grating needs to be within $\theta_{ss}/36$ or $13°/36 = 0.361°$. This is not a perfect formula since the light through the slit has a non-uniform profile.

Finally, to calculate the focal length $f_1$ of the lens $L_1$, if

$$|M_1| = f_1/x_o = 0.125$$

(where $x_o$ is a variable that equals the distance from the object to the focal point of the lens $L_1$) and

$$x_o = 100 \text{ mm}$$

then

$$f_1 = 12.5 \text{ mm}.$$

So we have

$$f_1 = 12.5 \text{ mm}$$

$$f_2 = 12.0 \text{ mm}$$

$$f_3 = 14.0 \text{ mm}.$$

As described, the image recording device 40 of the present invention includes both the spatial imaging device 62 and the spectral imaging device 74. The image processing apparatus 36 as illustrated processes both the spatial and spectral information from the same acquired image (i.e. acquired from the same position on the web at the same time). The spatial and spectral images, taken together, allow the press operators to analyze the print quality of the image and make adjustments, where necessary. This system allows for improved color control of the printed web 12 in that the image processing apparatus 36 can measure the spectral response of color bar patches within a color bar with very fine spectral resolution. This makes it easier to match the densitometric and colorimetric filters for measuring color to the image processing apparatus 36.

Fig. 5 illustrates the spectral and spatial information generated using the image processing apparatus 36 of the present invention. As illustrated, the spatial information is measured along the horizontal axis and the spectral information along the vertical axis. Using this information, the print quality of the printed substrate can be monitored and adjusted as necessary. Light having a wavelength of approximately 400 nm is located near the top of the image and light of approximately 700 nm is located near the bottom of the image.

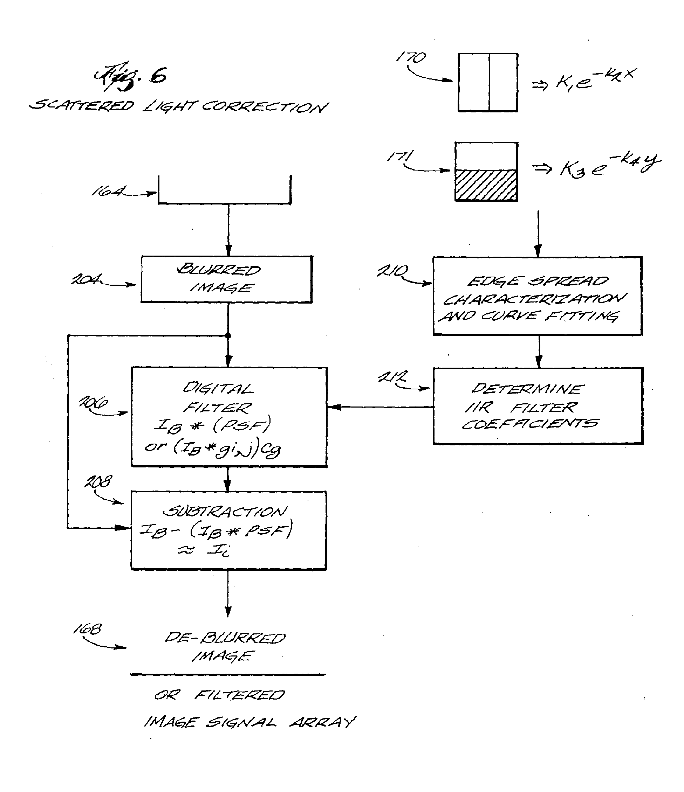

Scattered light is an issue in systems for measuring color quality because scattered light affects the accuracy of the color measurement of the printed substrate. One solution to scattered light problems in systems for measuring color is described in U.S. Patent 5,724,259, the entire contents of which is incorporated herein by reference. Fig. 6 illustrates a flow chart of this scattered light correction. Another solution to the scattered light issue is to adjust the optics and/or illumination of the web to reduce the effects of scattered light.

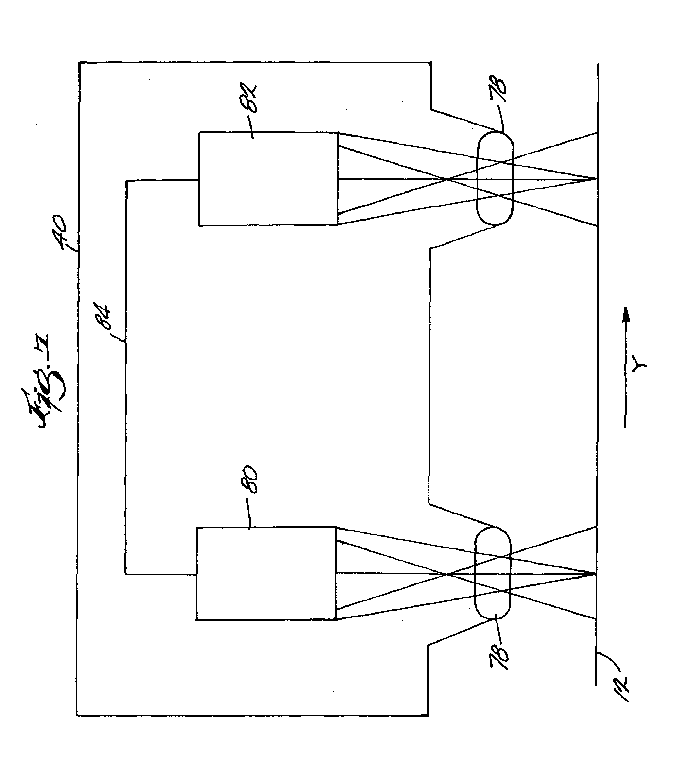

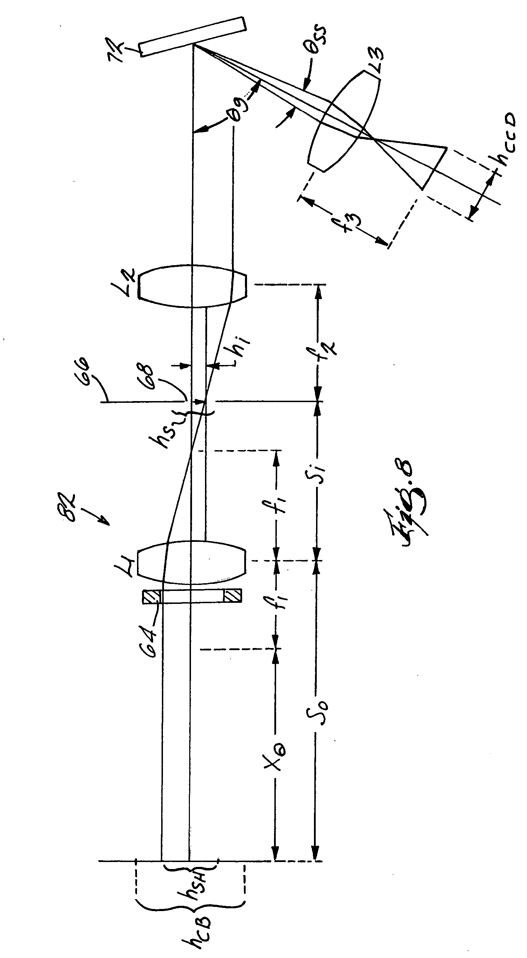

Figs. 7 and 8 illustrate an alternative embodiment of the present invention utilizing separate spectral and spatial processors that process separate acquired images. In this embodiment, both processors are sampling a line around two inches long. With reference to Fig. 7, the spatial components 80 include a single channel CCD positioned upstream from the spectral components 82. The spatial components 80 measure the position on the web 12 being measured to time the illumination of the web, and thus the acquisition of the image, by the spectral components 82 to ensure that the spectral components are acquiring an image of the desired region of the web. The spatial components 80 and spectral components 82 are connected by signal bus 84 such that the spatial components 80 send a signal to the spectral components 82 signaling the spectral components 82 when to acquire an image from the printed substrate moving below the image processing apparatus 36. Utilizing the separate spatial and spectral images allows for the illumination of a very thin line across the color bar (or other region within the work), reducing any issues caused by scattered light. Further, the scattered light that does remain is more easily correctable. A continuous light source is used to illuminate the web for the spatial sensor, while a strobe should be used to illuminate the web for the spectral sensor.

In one embodiment, the spatial components include a line-scan CCD that can continuously sample a line across the web in the lateral direction. In this design, the spatial resolution of the spatial processor is of interest. Circumferentially, this can be determined by the maximum line rate of the processor and the maximum press speed. For example, with a press moving at 3000 ft/min, and if we want 0.0125" per pixel circumferentially, we need a line rate of 48 kHz. With 0.0125" resolution (or 80 dpi), and the smallest color bar height being 1/16", this provides for five pixels circumferentially, which should be sufficient to locate the color bar. Laterally, the resolution is determined by the optics, the processor size, and the number of pixels. If we want to span two inches laterally, and the sensor has 128 pixels, we have a lateral resolution of 0.0156", or 64 dpi. With a color bar patch width of 0.1", this provides for 6.4 pixels per color bar patch, which should be sufficient.

Fig. 8 illustrates the details of the optics design for the spectral processor. The spectral optics are similar to those described above with respect to Figs. 3 and 4, minus the beamsplitter, and thus will not be separately discussed.

Fig. 9 illustrates an alternative embodiment of the present invention. A prism 86 is used to disperse the light in place of a diffraction grating, though it is understood that a diffraction grating could be used here in the same way as described above for Fig. 4. As mentioned above, a prism may also replace the diffraction grating in the embodiments of Figs. 4 or 8. Depending on which dispersing element is used in the system, be it a prism, diffraction grating, or other dispersing element, there are different formulas to calculate the angular spread $\theta_{ss}$, all of which are known in the art. Utilizing a prism 86 results in an angular spread $\theta_{ss}$ about one half as large as the angular spread $\theta_{ss}$ described above for Fig. 4. Using a prism 86 results in a dispersion vs. wavelength that is highly non-linear (the prism 86 spreads the red wavelengths more and compresses the blue wavelengths, resulting in lower resolution) and can be corrected for. If the non-linearity of the prism is such that the blue wavelengths are compressed too much to obtain the desired spectral resolution, a smaller slit or a thinner line of illumination can be used. Using a prism as a dispersion element does not result in the overlapping spectra described above with respect to the diffraction grating of Fig. 4. Thus, no filters are required before the prism to block out unwanted light.

As illustrated in Fig. 9, a single spectral sensor 88 is used to monitor color quality. A thin line of the web 12 is continuously illuminated. The single sensor 88 measures the spectra of the web continuously. The spectral sensor 88 can be utilized to build the spatial image by applying a weighted transform that functionally converts the sensor to a monochrome sensor. The weighted transform is a mathematical processing of the signal generated by the spectral sensor 88. The application of the weighted transform allows the single sensor 88 to also extract the spatial information.

This embodiment could be used to control the color of the printed web without utilizing a color bar as the sensor measures multiple lines across the printed web 12 continuously, known in the art as markless color control. The circumferential spatial resolution of the image processing apparatus 36 is then only limited by the speed at which the spectral sensor 88 can scan the web, and by the maximum press speed. The spectral resolution, however, is independent of the press speed and sensor 88 speed. The sensor 88 could be a small format area-scan CCD with a fast frame rate that can continuously scan the web. The sensor 88 receives an image similar to that shown in Fig. 5. The spectral optics of the sensor 88 may not require a slit when the area-scan CCD is used to achieve the desired spectral resolution because only a thin line of the web is illuminated. However, a slit may still be used and may be desirable to ensure that the desired spectral resolution is accomplished. The slit width, or line width where a slit is not used, determines the spectral resolution. The spectral optics of this embodiment are very similar to those discussed above with respect to Fig. 4, and thus will not be separately discussed. It is understood that in other embodiments (not shown), the sensor 88 could be a linescan CCD.

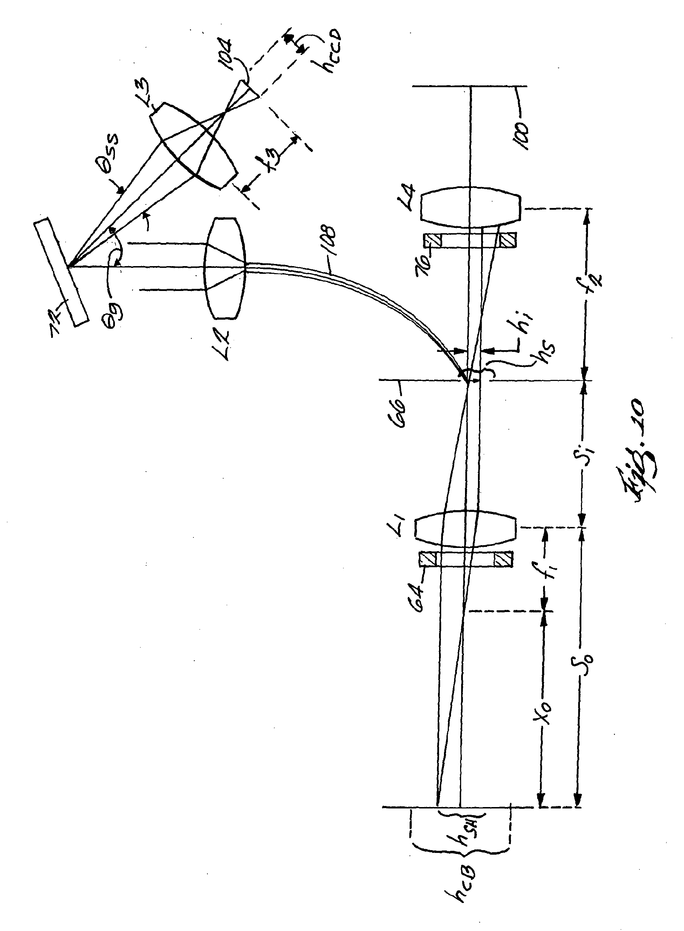

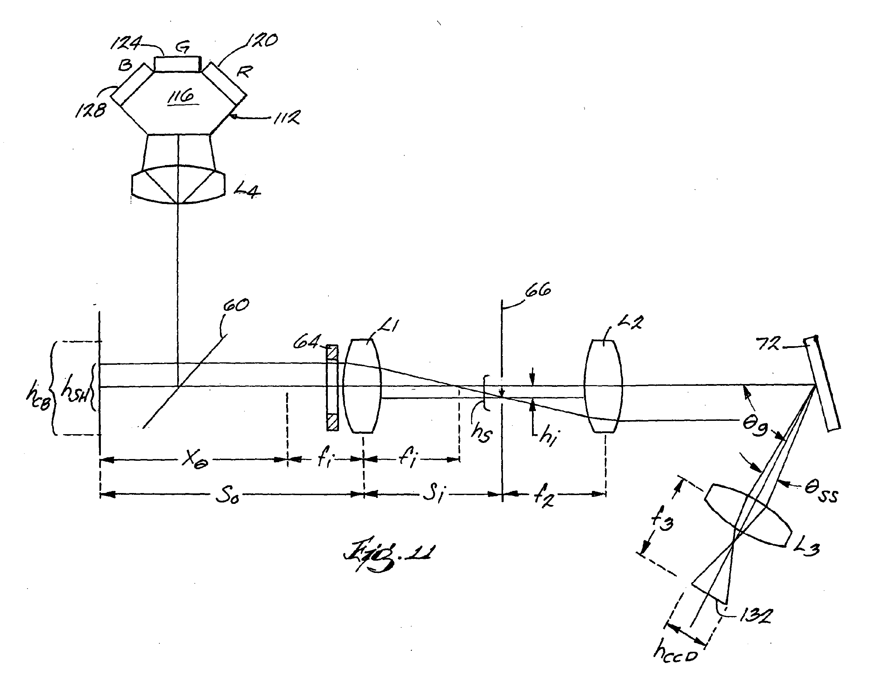

In another aspect of the invention as shown in Figs. 10 and 11, the image processing apparatus 36 includes a first processor and a second processor. Both the first and second processors are capable of processing the spectral information from an acquired image and neither of the first or second processors is necessarily dedicated to processing the spatial or spectral information from the acquired image. When it is said that both processors are capable of processing the spectral information, it is meant that both processors are capable of providing measurements to a control feedback loop or to the press operator in a certain color space format. One of the processors is a large format sensor (i.e., it is capable of measuring a large number of pixels of information) and the other is a small format sensor (capable of measuring as few as a single pixel). In general, the preferred way to measure the color of the acquired image is using a small format sensor that measures only a single spot of color. However, this would make the color measurement process too slow to be practical for use in web printing applications. The combination of the large format sensor and small format sensor in an image processing apparatus is a compromise of high resolution color measurement and speed. Further, by working together, both sensors can provide color information in different color spaces, even though one sensor may be gray scale, by a calibration algorithm. Based on several measurement comparisons, one sensor would be calibrated to the other by the calculation of slope and offset correction constants. The calculation of different types of correction constants is possible, for example, with a quadratic correction constant.

Specifically with respect to the idea of calibrating one sensor to the other, a couple of examples follow. Assuming that the small format sensor has an accurate response over its full dynamic range (i.e., any non-linearities are removed by using data from a calibration procedure), and assuming that both sensors have the same spectral resolution, then the small format sensor measures an area included in a larger area measured by the large format sensor. For some spectral channel, the large format sensor may report this small area to read 0.25 reflectance units and the small format sensor reports 0.20 reflectance units. For another spot, the large format sensor reports 0.85 reflectance units, and the small format sensor reports 0.83 reflectance units. Similar data is collected for many such spots. Some correction is applied to the large format sensor data to make these readings agree in an optimal sense. A simple linear correction: $R_L = a_1 * R_S + a_2$ could be assumed, where $R_L$ is the response of the large format sensor, $R_S$ the response of the small format sensor, and $a_1$ and $a_2$ are constants determined by fitting responses of the sensors to this model. The more data collected and the more the data spans the dynamic ranges of the two sensors, the better the calibration.

However, if it is assumed that the sensors have different spectral resolution, then the spectral response of the low spectral resolution sensor must be approximated with spectral data from the high spectral resolution sensor. Assuming one channel (such as red) of the low spectral resolution sensor has a given spectral response, which can be estimated based upon manufacturer's data, and assuming there is an estimate of the low spectral resolution sensor spectral response in 20 nm intervals, then the high spectral resolution sensor might measure at 5 nm resolution. The manufacturer's data could be interpolated to obtain 5 nm spectral data. Then, a broad bandwidth filter is applied to the high spectral resolution sensor data to approximate what the low spectral resolution sensor will see in the red channel. Now, one sensor can be fit to the other as described in the previous paragraph.

The small format sensor can be removed from the image processing apparatus 36 and the image processing apparatus will still perform its functions, though the color measurement will be at a lower resolution. This allows for accurate off-line calibration of the small sensor without a stoppage of the equipment being necessary. This increases the efficiency of the system in that image processing can still take place when calibration of the small format sensor is necessary (i.e., when the small format sensor is not functioning) and also increases the repeatability of measurements between the color desk sensor and the on-line sensor. The removable small format sensor can be installed into a desktop color measurement device, which will allow for direct comparison (and hence, calibration) of color measurements between the on-press and off-press devices. It also allows current systems that utilize only the large format to be upgraded by the addition of the small format sensor.

Referring to Fig. 10, the first processor is a large format sensor, such as a single black and white CCD sensor 100. One such sensor 100 that could be used is model number KAF-0261E, available from Kodak. In general, the sensor 100 will process the spatial information from the acquired image, however, it is understood that the sensor 100 is capable of processing the spectral information as well. Generally, the sensor 100 has low spectral resolution to increase the processing speed of the image processing apparatus 36. Many of the details of the optics in Fig. 10 and their proper placement and/or alignment are explained in detail above with respect to Fig. 4 and therefore will not be discussed here.

The second processor is a small format sensor, such as a line-scan CCD sensor 104. Exemplary CCD sensors 104 that could be used is model number IL-P3-0512 available from Dalsa Corporation of Waterloo, Ontario Canada, or model number CCD39-02, available from e2v technologies of Elmsford, New York. The line-scan CCD sensor 104 measures a point of color and has a high spectral resolution. Generally, the line-scan CCD sensor 104 processes the spectral information from the acquired image. As illustrated in Fig. 10, a fiber optic bundle 108 receives at least a portion of the acquired image from the slit 68 and transports that portion of the image to the collimating lens $L_2$. The fiber optic bundle 108 receives 100% of a first portion of the light reflected from the web. The remaining portion (a second portion of the reflected light) of the acquired image is then directed to the line-scan CCD sensor 104. It is understood by one of skill in the art that a beamsplitter, similar to the beamsplitter 60 discussed above with respect to Fig. 4, could be used in addition to the bundle 108 to deliver the image to the lens $L_2$ such that the fields of view of the sensors 100, 104 overlap. It is also understood that a mirror could be used in place of the fiber optic bundle 108.

The lens $L_2$ transmits light as a parallel beam to the ruled diffraction grating 72. It is understood that a transmission-type grating or a prism could be used instead of a diffraction grating as the dispersion element. It is also understood that a color filter wheel or other changeable color filters could be used instead of a grating or prism. The diffraction grating 72 disperses light into its spectral components along a known angular spread. The focusing lens $L_3$ focuses the dispersed light onto the line-scan CCD 104.

The sensor 100 and the line-scan CCD 104 are in communication with each other (with reference to Fig. 7) such that information generated by one sensor can be used to direct the function of the other. For example, the sensor 100 takes a picture of the printed substrate that includes the area to be analyzed. This information can be used to register the line-scan CCD 104 in that the information obtained from the sensor 100 directs the line-scan CCD 104 when to snap its picture to ensure that the line-scan CCD 104, which takes a much smaller picture than the sensor 100, gets an image of the appropriate area.

In return, the line-scan CCD 104, which has a higher resolution and measures a much smaller area, can be used to calibrate the sensor 100. For example, because the line-scan CCD 104 takes in less light, the line-scan CCD 104 is less affected by scattered light. By comparing the measurements from the line-scan CCD 104 with the sensor 100, which takes in a greater amount of light and thus is more affected by scattered light, the sensor 100 can be adjusted to remove the inaccuracies caused by the scattered light based upon the more accurate measurement from the line-scan CCD 104. Other measurement inaccuracies, such as non-linearity problems, can also be calibrated out by comparing readings between the sensors.

Fig. 11 illustrates an alternative embodiment of the invention. In general, the first processor will process the spatial information from an acquired image of the printed substrate and the second processor will process the spectral information, though it is understood that both the first and second processors are capable of processing spectral information from an acquired image, as is defined above.

The first processor includes a large format sensor, such as a three CCD, RGB color sensor 112. The RGB color sensor 112 includes a dichroic prism 116 and a three CCD array including a red color filter 120, a green color filter 124, and a blue color filter 128. The red filter 120 transmits the red light and reflects blue and green light back into the prism 116. Similarly, the green filter 124 transmits green light, and the blue filter 128 transmits blue light. In this way, none of the light transmitted into the prism 116 is lost.

The image processing device of Fig. 11 utilizes the RGB color sensor 112 as the first processor, and a small format sensor, such as an area-scan CCD sensor 132, as the second processor. The area-scan CCD sensor 132 has a high spectral resolution and measures a line of color across the printed substrate. Generally, the area-scan CCD 132 will have a greater spectral resolution than, but will also be much slower than, the RGB color sensor 112.

In the embodiment of Fig. 11, the RGB color sensor 112 and the area-scan CCD 132 analyze an acquired image. As illustrated, a beamsplitter 60 reflects a portion of the acquired image from the printed substrate and directs the acquired image to the RGB color sensor 112. For example, if the beamsplitter 60 has a reflectance of fifty percent, fifty percent of the reflected light is directed to the RGB color sensor 112. The other fifty percent is directed to the area scan CCD 132 and thus the area-scan CCD 132 sees the same acquired image. Overall, the specific optics design for the area-scan CCD 132 is very similar to those described above with respect to Fig. 4 and thus will not be described again here.

Various features of the invention are set forth in the following claims.

## Claims

1. An image processing apparatus for use with a printed substrate, the image processing apparatus comprising:

   a first processor that receives an acquired image from a printed substrate and is adapted to process the spatial information from the acquired image; and
   a second processor that receives the same acquired image from the printed substrate and is adapted to process the spectral information from the acquired image.

2. The image processing apparatus of claim 1, further comprising a beamsplitter.

3. The image processing apparatus of claim 1, wherein the first and second processors generate first and second signals, respectively, and further comprising a third processor that analyzes the first and second signals to reduce the effects of scattered light.

4. The image processing apparatus of claim 1, wherein the first processor includes a spatial imaging device.

5. The image processing apparatus of claim 1, wherein the second processor includes a spectral imaging device.

6. The image processing apparatus of claim 1, further comprising an illuminator directed towards the printed substrate.

7. The image processing apparatus of claim 1, further comprising one of a diffraction grating or a prism.

8. The image processing apparatus of claim 1, further comprising:

   a first lens;
   a light blocker having a slit therein;
   a second lens;
   a cutoff filter; and
   a third lens.

9. An image processing apparatus for use with a printed substrate, the image processing apparatus comprising:

   a beamsplitter positioned to separate an acquired image from a printed substrate into multiple beams;
   a first processor that receives a first beam of the acquired image from the beamsplitter and is adapted to process the spatial information from the acquired image; and
   a second processor that receives a second beam of the same acquired image from the beamsplitter and is adapted to process the spectral information from the acquired image.

10. The image processing apparatus of claim 9, wherein the first processor is a spatial imaging device.

11. The image processing apparatus of claim 9, wherein the second processor is a spectral imaging device.

12. The image processing apparatus of claim 9, further comprising a third processor that analyzes data from the first and second processors, and wherein the third processor digitizes the data to reduce the effects of scattered light.

13. An apparatus for monitoring color of a printed substrate, the apparatus comprising:

   an image processing apparatus positioned with respect to a printed substrate to receive an acquired image of the printed substrate, the image processing apparatus including

   a beamsplitter positioned to separate the acquired image into multiple beams,
   a first processor that receives a first beam of the acquired image from the beamsplitter and is adapted to process the spatial information from the acquired image, and
   a second processor that receives a second beam of the same acquired image from the beamsplitter and is adapted to process the spectral information from the acquired image;
   a diffraction grating; and

   a third processor for receiving and processing a signal from each of the first and second processors adapted to correct the signals for the effects of scattered light.

14. A method for monitoring the color of a printed substrate, the method comprising:

   acquiring an image from a printed substrate; and thereafter
   processing spatial and spectral information generated from the acquired image.

15. The method of claim 14, wherein acquiring the image from the printed substrate includes acquiring a plurality of color portions on the printed substrate within the image.

**16.** The method of claim 14, wherein processing the spatial and spectral information includes processing the spatial information generated using a first processor and processing the spectral information generated using a second processor.

**17.** The method of claim 14, wherein processing the spatial and spectral information includes processing the spatial and spectral information generated using the same processor.

**18.** A method for monitoring the color of a printed substrate, the method comprising:

  acquiring an image from a printed substrate;
  processing spatial information generated from the acquired image; and
  processing the spectral information generated from the same acquired image.

**19.** The method of claim 18, further comprising providing the same acquired image to a first processor that processes the spatial information generated and to a second processor that processes the spectral information generated.

**20.** A method for monitoring color of a printed substrate, the method comprising:

  acquiring an image from a printed substrate;
  providing the information generated from the acquired image to multiple processors;
  processing the spatial information generated from the acquired image using a first processor, generating a first signal;
  processing the spectral information generated from the same acquired image using a second processor, generating a second signal; and
  processing the first and second signals to correct for the effects of scattered light.

**21.** A method for monitoring color of a printed substrate, the method comprising:

  acquiring an image from a printed substrate, wherein acquiring the image includes acquiring information from multiple color portions on the printed substrate within the image;
  processing spatial information generated from the acquired image; and
  processing the spectral information generated from the same acquired image.

**22.** A method for monitoring color of a printed substrate, the method comprising:

  acquiring an image from a printed substrate, wherein acquiring the image includes acquiring information from multiple color portions on the printed substrate within the image;
  providing the information generated from the acquired image to multiple processors;
  processing the spatial information generated from the acquired image using a first processor; and
  processing the spectral information generated from the same acquired image using a second processor.

**23.** The method of claim 22, wherein processing the spatial and spectral information produces a signal, and wherein the signal is transmitted to a third processor that processes the signal to correct for the effects of scattered light.

**24.** An image processing apparatus for use with a printed substrate, the image processing apparatus comprising:

  a processor that receives an acquired image from a printed substrate and is adapted to process the spectral information from the acquired image; and
  a weighted transform applied to the processor, the transform adapted to allow the processor to process the spatial information from the acquired image.

**25.** The image processing apparatus of claim 24, further comprising one of a diffraction grating or a prism.

**26.** The image processing apparatus of claim 24, further comprising:

  a first lens;
  a light blocker having a slit therein;
  a second lens; and
  a third lens.

**27.** The image processing apparatus of claim 24, wherein the processor includes a line-scan CCD.

**28.** A method for monitoring the color of a printed substrate, the method comprising:

  acquiring an image from a printed substrate;
  processing spectral information generated from the acquired image using a processor; and
  processing the spatial information generated from the same acquired image using the same processor.

**29.** The method of claim 28, wherein processing the spatial information includes applying a weighted transform to the processor to allow processing of the spatial information.

30. A method for monitoring color of a printed substrate, the method comprising:

acquiring an image from a printed substrate, wherein acquiring the image includes acquiring information from multiple color portions on the printed substrate within the image; processing the spatial information generated from the acquired image using a processor, generating a first signal; processing the spectral information generated from the same acquired image using the same processor, generating a second signal; and processing the first and second signals to correct for the effects of scattered light.

31. The method of claim 30, wherein processing the spatial information includes applying a weighted transform to the processor to allow processing of the spatial information.

32. An image processing apparatus for use with a printed substrate, the image processing apparatus comprising:

a first processor that receives a first acquired image from a printed substrate, wherein the first acquired image includes information acquired from multiple color portions on the printed substrate within the image, and wherein the first processor is adapted to process the spatial information from the first acquired image; a second processor that receives a second acquired image from the printed substrate, wherein the second acquired image includes information acquired from multiple color portions on the printed substrate within the image, and wherein the second processor is adapted to process the spectral information from the second acquired image; and a communication link between the first and second processors such that the spatial information from the first processor directs the second processor to acquire the second image.

33. The image processing apparatus of claim 32, further comprising an illuminator directed towards the printed substrate, the illuminator electronically coupled to the communication link between the first and second processors.

34. The image processing apparatus of claim 33, wherein illuminator is a strobe light, and wherein the spatial information from the first processor directs the strobe when to illuminate the web.

35. The image processing apparatus of claim 32, further comprising one of a diffraction grating or a prism.

36. The image processing apparatus of claim 32, further comprising:

a first lens; a light blocker having a slit therein; a second lens; and a third lens.

37. The image processing apparatus of claim 3, wherein the first processor includes a line-scan CCD.

38. A method for monitoring color of a printed substrate, the method comprising:

acquiring a first image from multiple color portions on a printed substrate; processing the spatial information generated from the first acquired image using a first processor; generating a signal based upon the spatial information; sending the signal from the first processor to a second processor via a communication link; acquiring a second image from multiple color portions on the printed substrate based upon the signal; and processing the spectral information generated from the second acquired image using a second processor.

39. The method of claim 38, wherein acquiring the second image includes acquiring an image of the same position on the printed substrate as the first image at a later point in time than the acquisition of the first image.

40. An image processing apparatus for use with a printed substrate, the image processing apparatus comprising:

a first processor that receives an acquired image from a printed substrate; and a second processor that receives the same acquired image from the printed substrate;

wherein both the first and the second processors are capable of processing the spectral information from the acquired image.

41. The image processing apparatus of claim 40, wherein the first processor includes a large format sensor, and wherein the second processor includes a small format sensor.

**42.** The image processing apparatus of claim 40, wherein the first processor includes a single black and white CCD sensor.

**43.** The image processing apparatus of claim 40, wherein the first processor includes a three CCD color sensor.

**44.** The image processing apparatus of claim 40, wherein the second processor includes a line-scan CCD sensor.

**45.** The image processing apparatus of claim 40, wherein the second processor includes an area-scan CCD sensor.

**46.** The image processing apparatus of claim 40, wherein the second processor includes a fiber optic bundle to capture and direct the acquired image to the second processor.

**47.** The image processing apparatus of claim 40, wherein the first processor includes a sensor having a low spectral resolution, and wherein the second processor includes a sensor having a high spectral resolution.

**48.** The image processing apparatus of claim 40, wherein the first processor and the second processor are in communication such that information from one of the first or second processors can be used to direct the function of the other of the first or second processors.

**49.** The image processing apparatus of claim 48, wherein information from the first processor can be used to control the registration of the second processor.

**50.** The image processing apparatus of claim 48, wherein the information from the second processor can be used to calibrate the first processor.

**51.** The image processing apparatus of claim 40, wherein the first and second processors have different dynamic ranges.

**52.** The image processing apparatus of claim 40, wherein the second processor is removable.

**53.** An image processing apparatus for use with a printed substrate, the image processing apparatus comprising:

a first processor including a large format sensor to process information from an image acquired from a printed substrate;
a second processor including a small format sensor to process information from the same acquired image; and
a fiber optic bundle positioned to receive the acquired image from the printed substrate and operable to direct the acquired image to the second processor;

wherein both the first processor and the second processor are operable to process the spectral information from the acquired image.

**54.** The image processing apparatus of claim 53, wherein the first processor is a spatial imaging device.

**55.** The image processing apparatus of claim 54, wherein the spatial imaging device includes a single CCD, black and white sensor.

**56.** The image processing apparatus of claim 54, wherein the spatial imaging device is also adapted to process the spectral information from the acquired image.

**57.** The image processing apparatus of claim 53, wherein the second processor includes a line-scan CCD sensor.

**58.** The image processing apparatus of claim 53, wherein the second processor has a high spectral resolution.

**59.** The image processing apparatus of claim 53, further comprising a third processor that analyzes data from the first and second processors, and wherein the third processor digitizes the data to reduce the effects of scattered light.

**60.** The image processing apparatus of claim 53, wherein information from the first processor can be used to control the registration of the second processor.

**61.** The image processing apparatus of claim 53, wherein information from the second processor can be used to calibrate the first processor.

**62.** The image processing apparatus of claim 53, wherein the second processor is removable.

**63.** A method for monitoring the color of a printed substrate, the method comprising:

acquiring an image from a printed substrate;
providing the acquired image to a first processor; and
providing the same acquired image to a second processor;

wherein both the first processor and the second processor are capable of processing spectral information from the acquired image.

64. The method of claim 63, further comprising processing the spatial information from the acquired image using the first processor and processing the spectral information from the acquired image using the second processor.

65. The method of claim 63, wherein acquiring the image from the printed substrate includes acquiring a plurality of color portions on the printed substrate within the image.

66. The method of claim 63, wherein processing the spatial information generates a first signal and processing the spectral information generates a second signal, and wherein the method further includes processing the first and second signals to correct for the effects of scattered light.

67. The method of claim 63, further comprising controlling the registration of the second processor using information from the first processor.

68. The method of claim 63, further comprising calibrating the first processor using information from the second processor.

69. An image processing apparatus for use with a printed substrate, the image processing apparatus comprising:

a first processor that receives at least a first portion of an acquired image from a printed substrate; and
a second processor that receives at least a second portion of the acquired image from the printed substrate;

wherein both the first and second processors are capable of processing the spectral information from the first and second portions of the acquired image, respectively.

70. The image processing apparatus of claim 69, wherein the first processor includes a large format sensor.

71. The image processing apparatus of claim 69, wherein the first processor includes a three CCD color sensor.

72. The image processing apparatus of claim 69, wherein the second processor includes a small format sensor.

73. The image processing apparatus of claim 69, wherein the second processor includes an area-scan CCD sensor.

74. The image processing apparatus of claim 69, further comprising:

a first lens;
a light blocker having a slit therein;
a second lens; and
a third lens.

75. The image processing apparatus of claim 69, further comprising one of a diffraction grating or a prism.

76. The image processing apparatus of claim 69, wherein information from the first processor is used to register the second processor, and wherein information from the second processor is used to calibrate the first processor.

77. A method for monitoring the color of a printed substrate, the method comprising:

acquiring an image from multiple color portions on a printed substrate;
processing information generated from a first portion of the acquired image using a first processor;
processing information generated from a second portion of the acquired image using a second processor;
registering the second processor using information from the first processor; and
calibrating the first processor using information from the second processor.

78. The method of claim 77, wherein processing information generated from the first portion of the acquired image using the first processor includes processing the spatial and spectral information generated from the first portion of the image.

79. The method of claim 77, wherein processing information generated from the second portion of the acquired image using the second processor includes processing the spatial and spectral information generated from the second portion of the image.

Fig. 1

_Fig. 2_

Fig. 3

Fig. 4

400
nm

700
nm

Fig. 5

*Fig. 6*

SCATTERED LIGHT CORRECTION

170 → $\Rightarrow K_1 e^{-k_2 x}$

171 → $\Rightarrow K_3 e^{-k_4 y}$

164

204 → | BLURRED IMAGE |

210 → | EDGE SPREAD CHARACTERIZATION AND CURVE FITTING |

206 → | DIGITAL FILTER $I_B * (PSF)$ or $(I_B * g_{i,j}) c_g$ |

212 → | DETERMINE IIR FILTER COEFFICIENTS |

208 → | SUBTRACTION $I_B - (I_B * PSF)$ $\approx I_i$ |

168 → DE-BLURRED IMAGE

OR FILTERED IMAGE SIGNAL ARRAY

Fig. 7

Fig. 8

Fig. 9

Fig. 10

EP 1 470 918 A2